# EUROPÄISCHE PATENTSCHRIFT

(11) **EP 1 588 085 B1**
(45) Veröffentlichungstag und Bekanntmachung des Hinweises auf die Patenterteilung: **23.01.2008**
(21) Anmeldenummer: 03799434.0
(22) Anmeldetag: 18.12.2003
(51) Int. Cl.: F16L 11/16

(54) **LEITUNGSELEMENT, INSBESONDERE FÜR ABGASLEITUNGEN IN KRAFTFAHRZEUGEN, SOWIE VERFAHREN ZU SEINER HERSTELLUNG**
PIPE ELEMENT, ESPECIALLY FOR EXHAUST PIPES IN MOTOR VEHICLES, AND METHOD FOR PRODUCING THE SAME
ELEMENT DE CONDUIT, EN PARTICULIER POUR CONDUITS DE GAZ D'ECHAPPEMENT DE VEHICULES AUTOMOBILES, ET SON PROCEDE DE PRODUCTION

(30) Priorität: 18.12.2002 DE 10259695; 19.12.2002 DE 10260056; 11.04.2003 DE 10316985
(43) Veröffentlichungstag der Anmeldung: 26.10.2005
(73) Patentinhaber: WESTFALIA Metallschlauchtechnik GmbH & Co. KG, 57271 Hilchenbach (DE)
(72) Erfinder: BAUMHOFF, Dietmar, 57080 Siegen (DE); HUPERTZ, Marcus, 57482 Wenden (DE); BENDER, Frank, 57489 Drolshagen (DE); HAUK, Stefan, 57271 Hilchenbach (DE); MÜNCKER, Karl-Heinz, 57271 Hilchenbach (DE); HUPERTZ, Günter, 57482 Wenden (DE); FUHRMANN, Manfred, 57271 Hilchenbach (DE); WEISS, Matthias, 57271 Hilchenbach (DE)
(74) Vertreter: Grosse, Wolf-Dietrich Rüdiger
(86) Internationale Anmeldenummer: PCT/DE2003/004184
(87) Internationale Veröffentlichungsnummer: WO 2004/055422

(56) Entgegenhaltungen:
- EP-A- 0 596 578
- DE-U- 7 631 806
- US-A- 1 570 886

## Beschreibung

Die Erfindung betrifft ein Verfahren zum Herstellen eines Leitungselementes für schwingbeanspruchte Rohrleitungen, insbesondere für Abgasleitungen in Kraftfahrzeugen, aus mindestens einem Vorprofiliertem Band, insbesondere Metallband, das schraubengangförmig mit balgartigen Windungen gewickelt wird, wobei Wickellagen mit einfach eingehakter oder mehrlagiger agraffartiger Bindung durch Formschluß, Verschweißen oder dergleichen Fügeverfahren miteinander verbunden sind und das Band mit mindestens einem aus der Ebene versetzten Stich und Umlenkung in eine Art Kreisbahn mit sowohl im gestreckten als auch im gestauchten Zustand ein Vielfaches der Banddicke betragenden Steghöhen der Bälge vorprofiliert wird, sowie ein nach dem Verfahren hergestelltes Leitungselement.

Ein gattungsgemäßer Stand der Technik ist duch die EP 0 596 578 A bekannt geworden. Die Aufgabe solcher Leitungselemente, die beispielsweise als spiralförmig gewickelte Agraffschläuche oder spiralförmig gewickelte, eingehakte Schläuche bekannt sind, die allerdings im Betrieb Restleckagen aufweisen, besteht darin, schwingbeanspruchte Rohrleitungen flexibel miteinander zu verbinden und dabei schwingungstechnisch weitgehend zu entkoppeln. Ein Modul solcher Leitungselemente ist in vielen Fällen ein Metallbalg. Da die großen Durchmesserunterschiede in den Wellungen des Metallbalgs Turbulenzen erzeugen können, wird in der Regel ein Metallschlauch in das Leitungselement integriert, um die laminare Abgasströmung sicherzustellen. Hierbei ist darauf zu achten, dass während des Betriebs keine Geräuschentwicklung durch das Anschlagen des Metallschlauchs an der Innenseite des Balgs entsteht. Um dies zu erreichen, wird in vielen Fällen ein den Schlauch umgebendes Drahtgestricke vorgesehen. Aus der DE 198 20 863 A1 ist ein flexibles Leitungselement bekannt, bei dem alternativ zu einem Drahtgestricke der Metallschlauch und der Metallbalg an definierten Orten in Anlagen zueinander gebracht werden.

Die bekannten Ausführungen erfordern neben unterschiedlichen Herstellprozessen für die Einzelelemente außerdem aufwendige Positionier- und Zusammenbauoperationen. Da neben der Herstellung von Einzelmodulen der beschriebenen Leitungselemente ferner der Montageprozess aufwendig ist, sehen ökonomischere Lösungen eine komplette Herstellung von Metallbalg und innenliegendem Schlauch in nur einem Fertigungsprozess durch schraubengangförmiges. Wickeln vor. Ein danach gefertigter, sogenannter Abgaswellschlauch ist durch die DE 38 09 210 C1 bekanntgeworden. Das dort beschriebene schraubengangförmige Wickeln eines vorprofilierten Metallbands hat jedoch zwei Nachteile. Zum einen wird keine vollständige Gasdichtheit des Leitungselementes erreicht. Zum anderen ist die geometrische Gestaltung der balgartigen Wellungen bei der Fertigung von Balg und Schlauch aus einem vorprofilierten Metallband starken Einschränkungen unterworfen, so dass die für die geforderten statischen und dynamischen Steifigkeiten notwendigen Eigenschaften in vielen Fällen, nicht erzielt werden können. Die Problematik liegt in den stark unterschiedlichen axialen und radialen Ausdehnungen der Schlauch- und Balgelemente zueinander, da beim Wickeln der unterschiedlichen Abmessungen aus einem vorprofiliertem Metallband die umformtechnische Grenze der Faltenbildung die erzielbaren Geometrieverhältnisse stark einschränkt.

Ein durch das DE-GM 76 31 806 bekannter, ein- oder mehrlagig durch schraubengangförmiges Wickeln eines profilierten Bandes oder Ineinanderstecken , von vorprofilierten, rohrförmigen Abschnitten aus Metall oder Kunststoff hergestellter Wellschlauch weist zur Gasdichtheit Band- bzw. Rohrkanten auf, die durch Formschluß, durch Verschweißen, Verkleben oder dergleichen Fügeverfahren festgelegt sind. Zur möglichst laminaren Gasführung ist die innen liegende Band- bzw: Rohrkante einstückig mit einer sich axial erstreckenden, rohrförmigen Verlängerung verbunden, die zumindest den durch den benachbarten Wellenberg gebildeten, schraubengangförmig oder kreisförmig umlaufenden Ringraum innen überdeckt.

Der Erfindung liegt die Aufgabe zugrunde, ein Verfahren und ein Leitungselement der eingangs genannten Art zu schaffen, die einen einstufigen Herstellprozess ohne weiteren Zusammenbau und ein geometrisch so gestaltetes Leitungselement ermöglichen, dass eine einfache schwingungstechnische Auslegung im Hinblick auf erforderliche statische und dynamische Steifigkeiten möglich ist.

Diese Aufgabe wird mit einem Verfahren erfindungsgemäß dadurch gelöst, dass die Bälge durch Verbinden der Enden von jeweils aus einem Endsteg der einen Wickellage und einem Anfangssteg der anderen Wickellage radial umgekanteten, abstehenden Stegen hergestellt werden. Wie zahlreiche Versuche bestätigt haben, lässt sich das Band mit einer Höhe der Stege vorprofilieren, die dem 25- bis 75-fachen der Dicke des Bandes entspricht. Bei einer üblichen Banddicke von 0,2 mm oder 0,3 mm lässt sich somit eine Steg- bzw. Balghöhe von 5 mm bzw. 7,5 mm bis 15 mm bzw. 22,5 mm erreichen. Die radial nach innen oder radial nach außen angeformten Stege mit einer solch großen Balghöhe geben dem Leitungselement eine hohe Flexibilität und Elastizität. Es lassen sich große Formenvarianten und balgartige Windungen bzw. Bälge mit vielfältiger Geometrie bzw. Konfiguration erreichen. Die Windungen /Bälge sind zudem im radialen Schnittpunkt nicht punktsymmetrisch, sondern wendelwellig, mit schraubengangförmiger Kontur symmetrisch zur Rotationsachse ausgebildet. Hierbei ist es möglich, Anfangs- und Endsteg aus einer Wickellage vorzusehen und die freien Enden der Stege miteinander zu verbinden, vorteilhaft durch umformtechnische Fügeverfahren oder thermische Fügeverfahren. Auch ist es möglich, mehr als zwei Stege auszuformen und miteinander zu verbinden.

In jedem Fall können die Metallbänder unterschiedliche Dicken, Breiten, mechanische Eigenschaften und chemische Zusammensetzungen aufweisen, so daß den unterschiedlichen Forderungen an die Geometrie von Schlauch und Balg Rechnung getragen werden kann. Es lassen sich auch elastomere, glasfaser verstärkte bzw. keramische Bänder oder Bänder aus Verbund-, Compound- bzw. Composite-Werkstoffen einsetzen. Die Bänder, gleich welcher Art und ob ein- oder mehrlagig vorprofiliert, werden ineinander gewickelt und derart zusammengefügt, dass eine im idealen Fall gasdichte Verbindung der Fügestelle erzielt wird.

Eine bevorzugte Ausführung sieht vor, dass in einem äußeren Balg ein in dessen Wellental mit diametral verlaufenden, dann aufeinander zu in einen gemeinsamen Überbrückungs- und Verbindungssteg umgefalzten Kurvenabschnitten seiner Stege übergehender; glockenartiger innerer Balg gewickelt wird. Die somit quasi ineinander geschachtelten, umgekehrten Bälge ergeben eine sehr weiche, entkoppelbare Konfiguration mit hoher Flexibilität und Elastizität. Denn auf annähernd gleicher Baulänge lässt sich eine doppelte. Zahl von Windungen bzw. Bälgen erreichen, so dass das Leitungselement nahezu doppelt so flexibel ist, weil es mehr Windungen bzw. Bälge besitzt. Die Ausformungen lassen sich zudem fertigungstechnisch günstig symmetrisch herstellen, wobei das zweite Band aufgrund des umgefalzten Überbrückungs- und Verbindungssteges gleichzeitig die Linerfunktion, d.h. die laminare Gasführung, übernimmt.

Die Gasdichtheit wird hier wieder dadurch erreicht, dass vorteilhaft die oben freien Stegenden des glockenartigen inneren Balges mit jeweils den benachbarten Stegenden des äußeren Balges verbunden werden.

Ein nach dem Verfahren hergestelltes Leitungselement zeichnet sich erfindungsgemäß dadurch aus, daß jeder Balg aus aus den Wickellagen umgekanteten, radial abstehenden Stegen besteht, deren freie Enden im Wellenberg gasdicht miteinander verbunden sind. So lässt sich beispielsweise durch Doppelung der Wickellage jeweils ein Anfangssteg einer Wickellage mit einem Endsteg einer anderen Wickellage zu einem Balg ausformen, der durch Verbinden der freien Stegenden dieser radial abstehenden Stege gasdicht wird.

Eine bevorzugte Ausführung der Erfindung sieht vor, dass ein den Schlauchgrundkörper bildendes Band mit glockenartigen Bälgen ausgebildet ist, von denen jeder in einem Balg des anderen Bandes angeordnet ist, wobei die freien Stegenden des äußeren Balges in dessen Wellenberg mit jeweils den freien Enden der ihnen benachbarten Stege des glockenartigen Balges verbunden sind, der mit einem aus den Stegen umgefalzten Verbindungssteg das Wellental des äußeren Balges überdeckt. Der äußere Balg mit darin angeordnetem umgekehrtem, glockenartigen Balg ergibt die bereits beschriebene sehr weiche Konfiguration bei hoher Flexibilität und Elastizität des Leitungselementes. Die trotz der unterschiedlichen Bänder erreichbare symmetrische Konfiguration bringt außerdem verfahrenstechnische Vorteile mit sich.

Weitere Merkmale und Einzelheiten der Erfindung ergeben sich aus den Ansprüchen und der nachfolgenden Beschreibung von in den Zeichnungen dargestellten Ausführungsbeispielen der Erfindung. Es zeigen:
- Fig. 1: als Profilschnitt mehrere Wickellagen eines aus einem Band hergestellten Leitungselementes bzw. Schlauches in einer Ausführung eines einlagigen Agraffschlauches mit angeformten, radial abstehenden Stegen, in der linken Bildhälfte gestaucht und in der rechten Bildhälfte gestreckt dargesteltt;
- Fig. 2: als Einzelheit der Fig. 1 in vergrößerter Darstellung den gestauchten Zustand des Leitungselementes;
- Fig. 3: eine Darstellung wie gemäß Fig. 1 in einer demgegenüber anderen Ausführung eines einlagigen Agraffschlauches;
- Fig. 4: eine Darstellung wie gemäß Fig. 1 in einer demgegenüber weiteren Ausführung eines einlagigen Agraffschlauches;
- Fig. 5: eine Darstellung wie gemäß den Fig. 1 und 2, demgegenüber hier aber ausgeführt als mehrlagiger Agraffschlauch und mit in der rechten Bildhälfte gezeigtem, gestauchtem Zustand des Leitungs elementes bzw. Abgasschlauches;
- Fig. 6: eine Darstellung wie gemäß Fig. 5 mit einer demgegenüber anderen Geometrie der Bälge bzw. Windungen;
- Fig. 7: im Profilschnitt weitere mögliche Ausführungen eines gasdichten Leitungselementes bzw. Schlauches im gestauchten wie gestreckten Zustand, mit eingehakter (I) oder mehrlagiger (II) Geometrie;
- Fig. 8: im Profilschnitt mehrere Wickellagen eines Leitungselementes bzw. Schlauches in einer im Mittenbereich eingehakten Ausführung, dargestellt im gestauchten Zustand (Bild oben, linke Hälfte) und gestrecktem Zustand (Bild oben, rechte Hälfte sowie vergrößert in der unteren Bildhälfte);
- Fig.9: im Profilschnitt mehrere Wickellagen eines Leitungselementes bzw. Schlauches in einer Ausführung der Herstellung aus zwei vorprofilierten Bändern mit Einhakung im Mittenbereich; dargestellt im gestauchten Zustand (Bild oben, linke Hälfte) und gestrecktem Zustand (Bild oben, rechte Hälfte sowie vergrößert in der unteren Bildhälfte);
- Fig.10: eine Darstellung wie gemäß Fig. 8 in einer demgegenüber anderen Ausführung eines aus zwei vorprofilierten Bändern gewickelten Leitungselementes bzw. Schlauches;
- Fig. 11: als Einzelheit im Profilschnitt weitere Ausführungen von form- und stoffschlüssigen Verbindungen der aufeinandertreffenden, radial nach außen weisenden Stege von ausgeformten Bälgen bzw. Windungen;
- Fig. 12: im Profilquerschnitt eine Ausführung eines aus zwei Bändern hergestellten Leitungselementes bzw. Schlauches, bei der ineinander geschachtelte Bälge der aus den beiden Bändern ausgeformten Bälge bzw. Windungen eine Art Glockenkonfiguration bilden; und
- Fig.13: in schematischer Weise eine Profilwalzenanordnung zum Vorprofilieren eines Bandes mit einem aus der Ebene versetzten Stich.

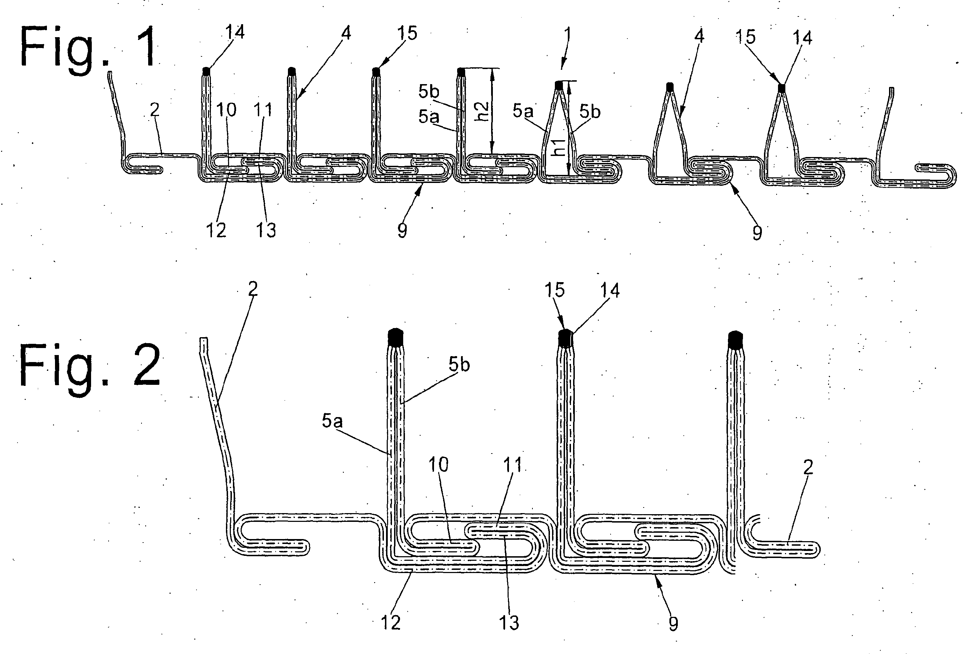

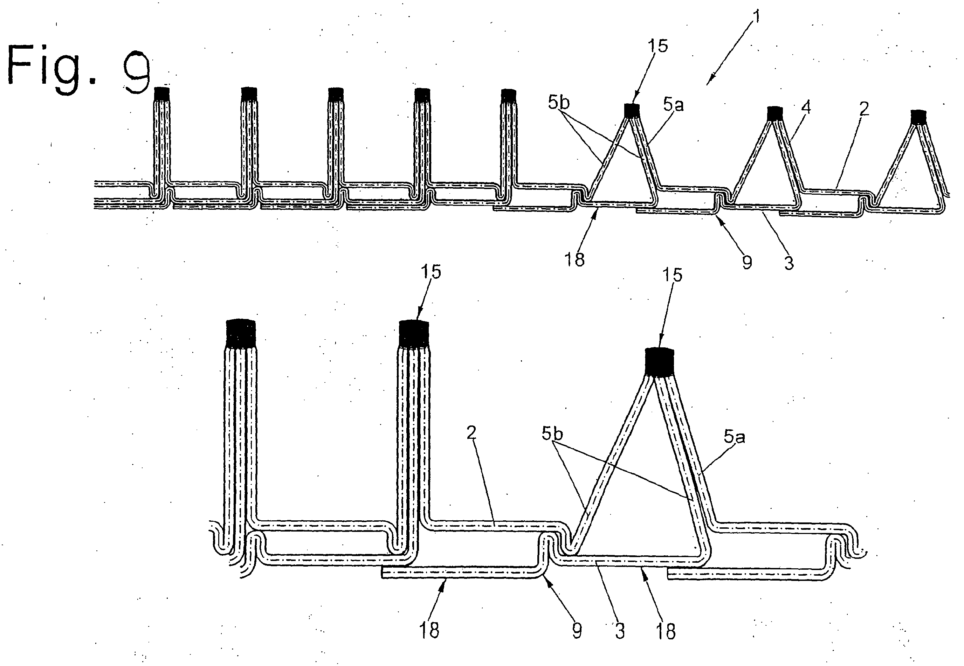

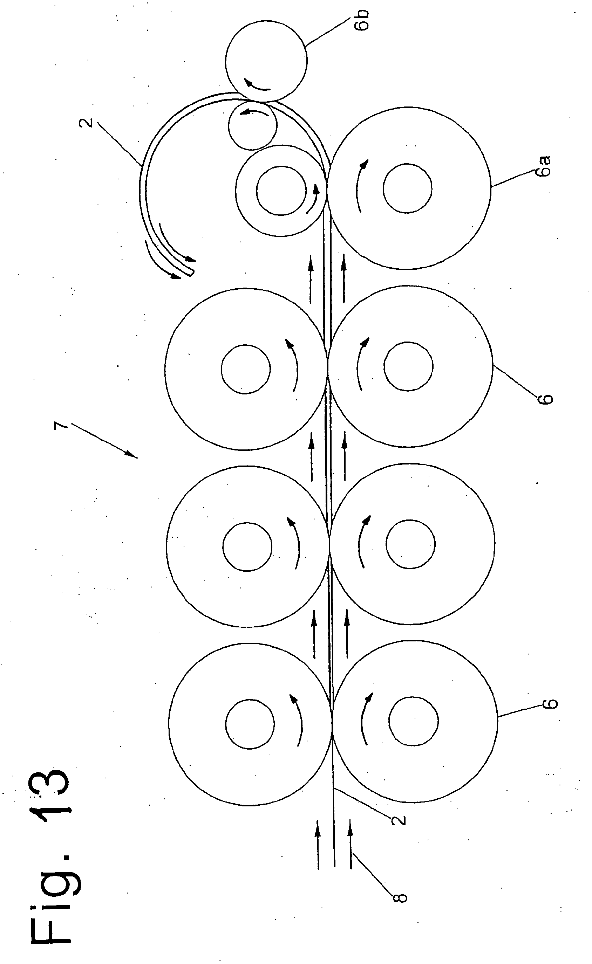

Allen in den Figuren 1 bis 13 in einem Profilschnitt dargestellten Schläuchen bzw. Leitungselementen 1 ist gemeinsam, gleich ob sie aus einem Band 2 (Figuren 1 bis 8) oder aus zwei Bändern 2,3 (Figuren 9 und 10 sowie 12 und 13) ein- oder mehrlagig hergestellt sind, dass sie in dem Band 2 bzw. in einem der Bänder 2,3 vorprofilierte balgartige Windungen bzw. Bälge 4 besitzen, bei der die Höhe h1 bzw. h2 der die Bälge 4 bildenden, radial nach innen oder außen ausgeformten Stege 5a,5b einem Vielfachen, 25- bis mindestens 75-fachen, der Dicke des Bandes 2 bzw. 3 entspricht. Zum Vorprofilieren dieser Stege 5a, 5b bzw. Bälge 4 wird das Band 2 in einer in Figur 13 schematisch dargestellten, mehrere aufeinanderfolgende Walzenpaare 6 aufweisenden Walzprofilieranlage 7 mit mindestens einem aus der Ebene versetzten Stich vorprofiliert, wozu das in der Schemazeichnung in der Durchlaufrichtung gemäß Pfeil 8 letzte Walzenpaar 6a etwas tiefer angeordnet ist. Das Band 2 wird, im Ausführungsbeispiel ein weiteres, auf einer Kreisbahn angeordnetes Walzenpaar 6b durchlaufend, in eine Art Kreisbahn umgelenkt. Das in der Walzprofilierung soweit vorgeformte Band wird in einer Wickeloperation endlos spiralförmig zu einem Schlauch ineinander gewickelt.

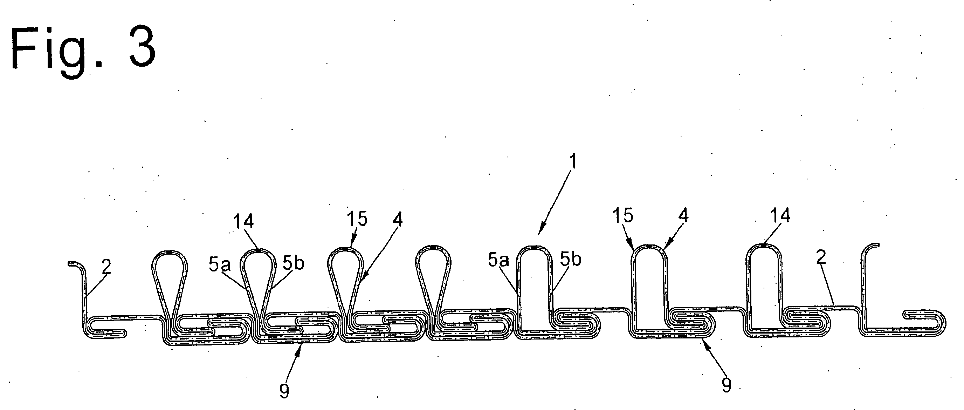

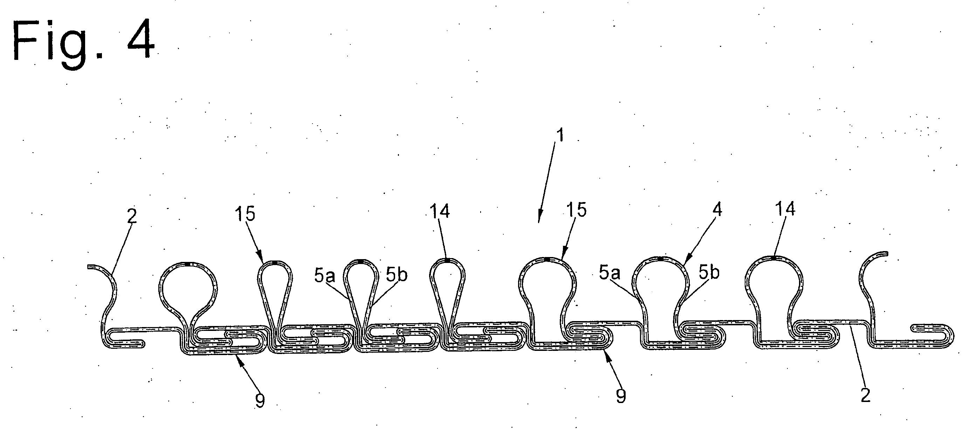

Die in den Figuren 1 bis 4 dargestellten Leitungselemente 1 bestehen aus Wickellagen mit einfach eingehakter Bindung 9. Bei diesen Profilen werden der Endsteg 10 und der Anfangssteg 11 zu Doppelungen 12 bzw. 13 verformt, die in den Ausführungsbeispielen dann nach außen umgelegt werden, so dass die radial abstehenden Stege 5a bzw. 5b angeformt sind. Die oberen, freien Enden der Stege 5a, 5b sind gasdicht miteinander verbunden, wie durch Schweißnähte 14 angedeutet, so dass ein jeweils geschlossener Balg 4 vorliegt. Wie aus den Figuren zu entnehmen ist, lassen sich je nach Vorprofilierung der. Stege 5a, 5b beliebige Konturen bzw. Geometrien der Bälge 4 erreichen, jeweils im gestreckten Zustand des Leitungselemetes 1 betrachtet z.B. nach Figur 1 spitz- bzw. dachförmig, nach Figur 3 im Querschnitt U-förmig und nach Figur 4 schlingenförmig bzw. omegaförmig, wobei insbesondere die Omegaform die Dauerfestigkeit steigert.

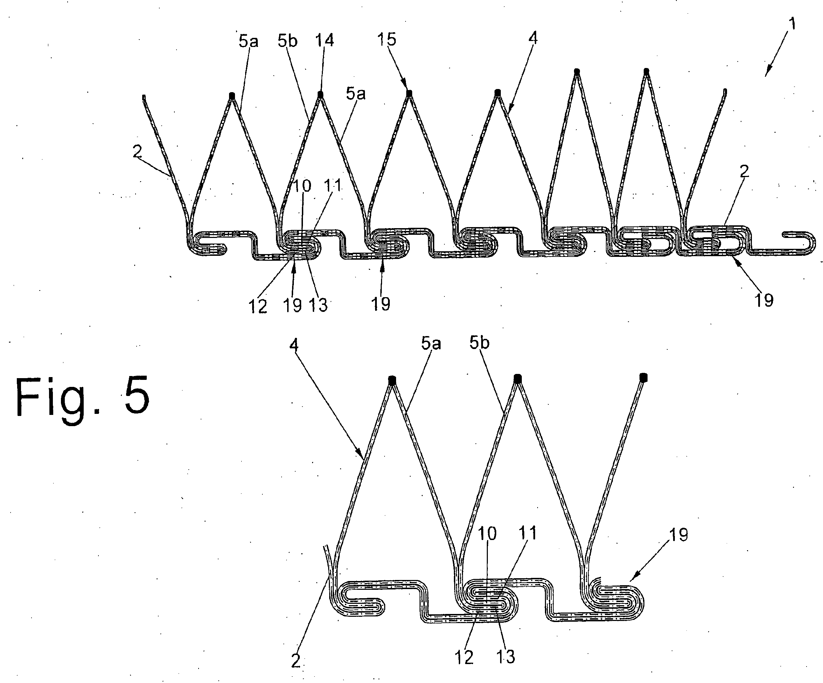

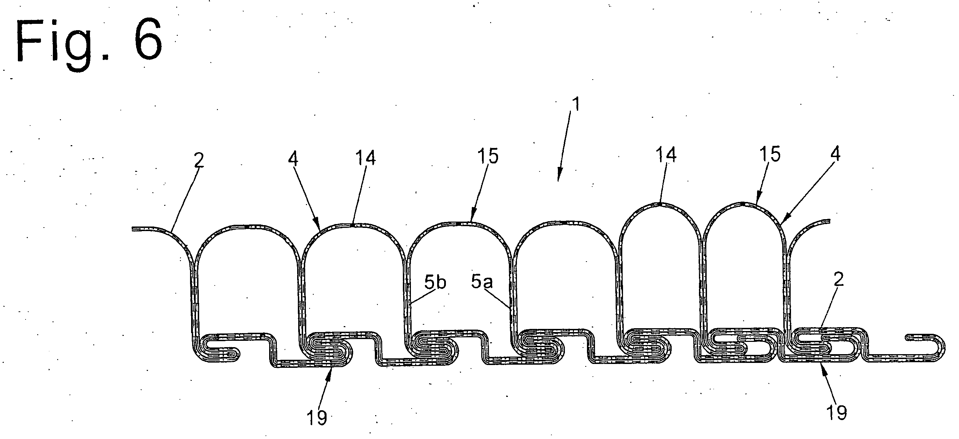

Bei den Leitungselementen der Figuren 5 und 6 handelt es sich um Agraffschläuche aus mehrlagigem Band, wobei die einzelnen Wickellagen durch eine agraffartige Bindung 19 miteinander verbunden sind. Der Endsteg 10 und der Anfangssteg 11 des Bandes 2 bilden ebenfalls wiederum Doppelungen 12 bzw. 13, die in die nach außen umgelegten Stege 5a, 5b übergehen. Bei dieser Agraffbindung 19 können keine äußeren Verunreinigungen zwischen die Profilbindungen eindringen. Die freien Enden der Stege 5a, 5b werden wie bei den vorbeschriebenen Ausführungen im Anschluß an das Wickeln in einem weiteren Arbeitsgang form- oder kraftschlüssig miteinander verbunden, z.B. durch Rollnahtschweißen, wie durch die Schweißnaht 14 angedeutet. Eine Alternative hierzu ist das Strahischweißen, das keinen Gegenhalter erfordert. Die Form bzw. Kontur der abstehenden Stege 5a, 5b. und damit der Bälge 4 wird wie für grundsätzlich alle Ausführungsvarianten so ausgewählt, dass eine einfache schwingungstechnische Auslegung im Hinblick auf erforderliche statische und dynamische Steifigkeiten gegeben ist.

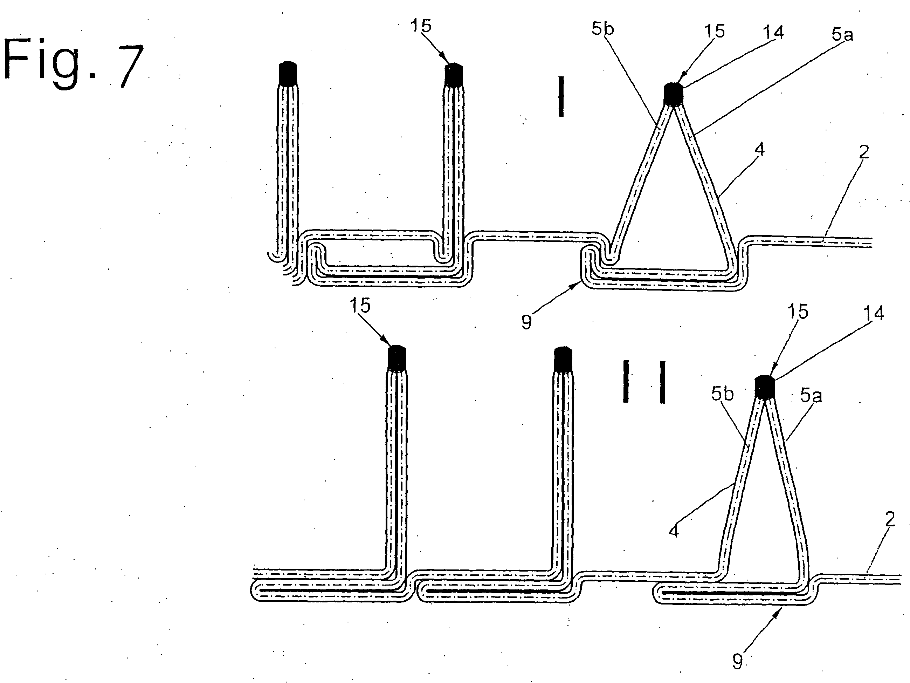

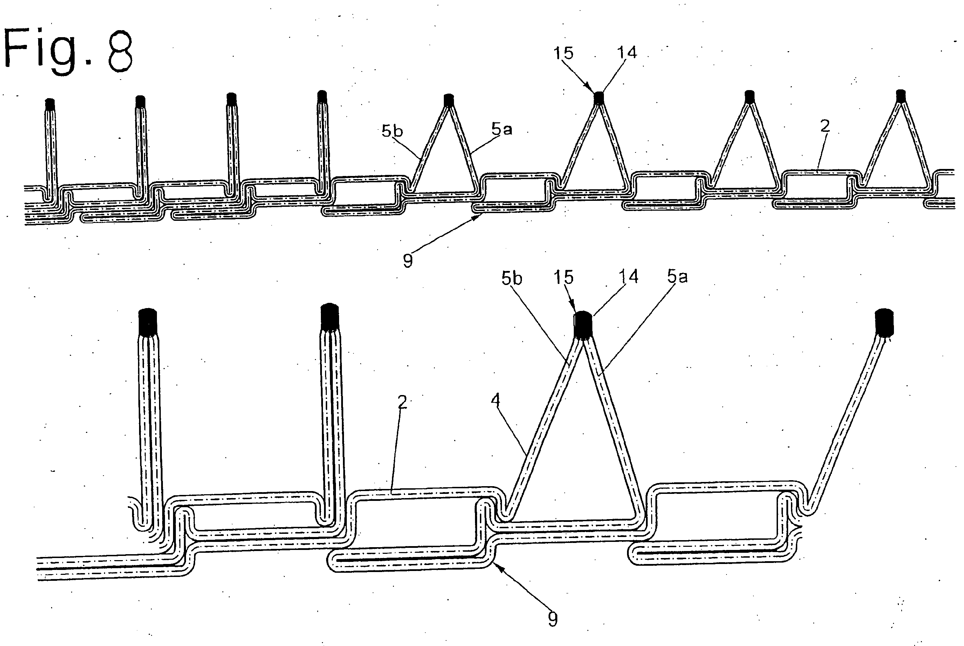

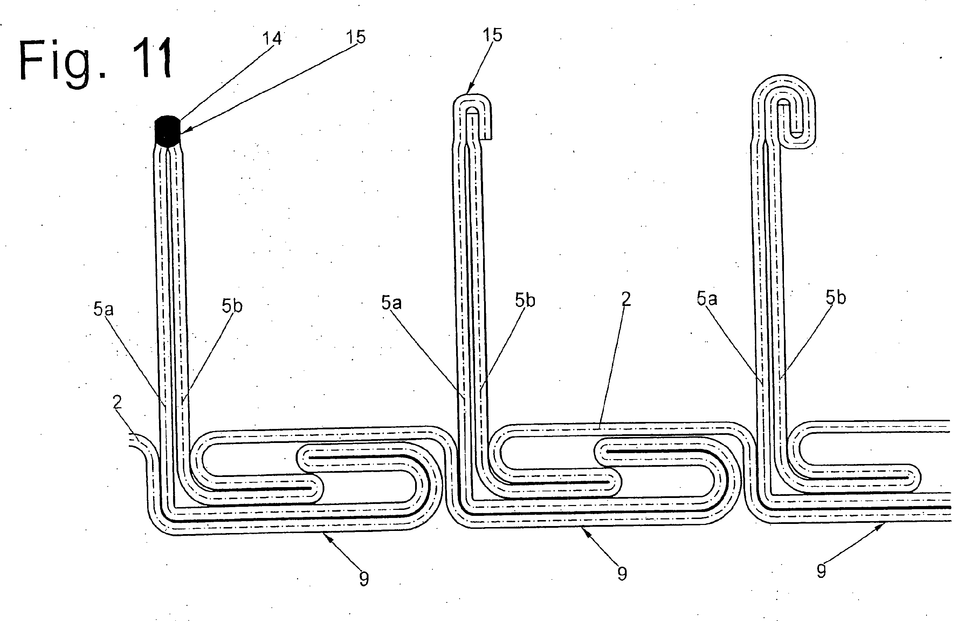

Die Figuren 7, 8 und 11 zeigen mögliche Varianten der Bindung 9,19 der einzelnen Wickellagen bei einem wie beschrieben aus einem Band 2 vorgeformten, radial abstehende, durch umformtechnisches oder thermisches Fügen gasdicht miteinander verbundene Stege 5a, 5b zur Bildung von Bälgen 4 aufweisenden Leitungselementes 1. Nach Figur 7, I wird eine eingehakte Bindung, nach Figur 7, II eine mehrlagige Geometrie, nach Figur 8 eine im Mittenbereich eingehakte Bindung verwirklicht. Aus Figur 11 lassen sich Beispiele für das Verbinden der freien Enden der radial ausgeformten Stege 5a, 5b entnehmen, und zwar in der linken Darstellung durch Verschweißen und in der mittigen bzw. rechten Darstellung durch umformtechnisches Fügen.

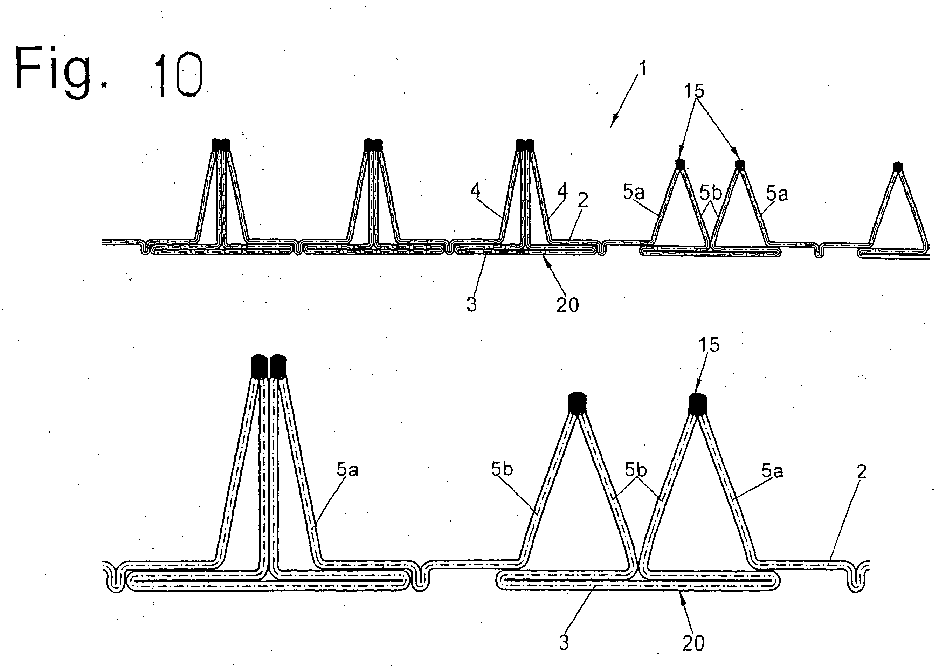

Abweichend von den vorbeschriebenen Ausführungen sind die Leitungselemente 1 nach Figur 9 und 10 aus zwei vorprofilierten Bändern 2 bzw. 3 gewickelt worden: Sowohl aus dem äußeren Band 2 als auch dem inneren Band 3 sind radial nach außen abstehende Stege 5a, 5b vorprofiliert, wobei jeweils die Stege 5b des inneren Bandes 3 mit den ihnen von außen her benachbarten Stegen 5a des äußeren Bandes 2 im Wellenberg 15 zu den gasdichten Bälgen 4 miteinander verschweißt sind. Eine Abwandlung ist der Figur 9 zu entnehmen, demnach von zwei in jeder Wickellage des äußeren Bandes 2 entfernt voneinander ausgebildeten Stegen 5a, 5b der eine Steg 5a mit am inneren Band 3 nur einem ausgebildeten Steg 5a unmittelbar gepaart ist, die freien Enden aller Stege im Wellenberg 15 allerdings gemeinsam miteinander verbunden (verschweißt) sind. Die einzelnen Wickellagen sind mit einer Einhakbindung 9 im Mittenbereich verbunden. Im Wesentlichen horizontale Bandenden 18 des inneren Bandes 3 geben dem Leitungselement 1 die zur laminaren Gasführung vorteilhafte Schlauchgeometrie. Das ist so auch bei dem Leitungselement 1 der Figur 10 verwirklicht, indem ein zwischen den radial umgelegten Stegen 5b liegender Bandabschnitt 20 eine Schlauchgeometrie bereitstellt.

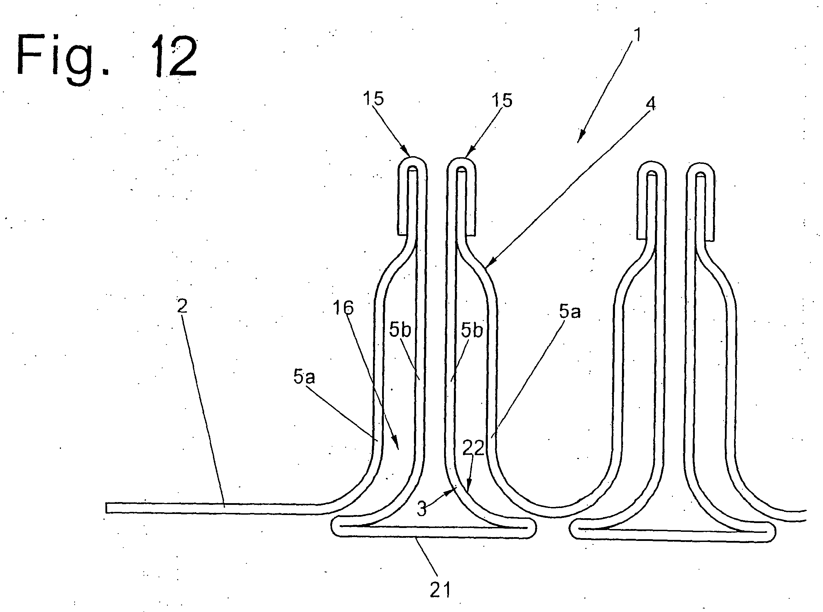

Eine besondere Ausführung eines aus zwei vorprofilierten Bändern 2,3 hergestellten Leitungselementes 1 ist in Figur 12 dargestellt. Die hier symmetrischen, radial abstehenden Stege 5a des äußeren Bandes 2 sind an ihren freien Enden mit den freien Enden von an dem den Schlauchgrundkörper bereitstellenden inneren Band 3, das hierzu mit einem umgefalzten Verbindungssteg 21 das Wellental 16 des von den Stegen 5a gebildeten äußeren Balges 4 überdeckt, ausgebildeten Stegen 5b verbunden. Der äußere Balg 4 schließt einen zu ihm umgekehrt ausgerichteten inneren Balg 22, gebildet aus dem Band 3, ein, so dass sich aus der Paarung von äußerem Balg 4 und innerem Balg 22 eine glockenartige Konfiguration ergibt. Im Ausführungsbeispiel sind die freien Enden der Stege 5a bzw. 5b umformtechnisch durch Falzen miteinander verbunden; gleichwohl ist an den Wellenbergen 15 eine thermische Fügung bzw. Verbindung möglich. Die Glockenkonfiguration der balgartigen Windungen 4 bzw. 22 bietet bei nahezu gleichen Bauabmessungen eine doppelte Windungszahl und damit große Flexibilität und Elastizität des Leitungselementes 1.

In jedem Fall können die Leitungselemente 1 in nur einem Fertigungsvorgang, durch schraubengangförmiges Wickeln, hergestellt werden. Das Walzprofilienverfahren zum Anformen der sehr hohen Stege bzw. Bälge oder balgartigen Windungen, das dem umformtechnischen Verfahren Drücken ähnliche Wickeln sowie das umformtechnische oder thermische Fügen, wodurch die Stege gasdicht miteinander verbunden werden, kann in einem kontinuierlichen Ablauf oder in einem diskontinuierlichen Ablauf erfolgen. Das erzeugte Leitungselement ist nicht nur idealerweise gasdicht, sondern wegen der hohen Bälge bzw. Windungen äußerst flexibel bzw. elastisch und bietet zudem eine laminare Gasführung, unabhängig davon, ob das Leitungselement aus einem Band oder aus zwei oder mehreren Bändern ein- oder mehrlagig gewickelt worden ist.

## Patentansprüche

1. Verfahren zum Herstellen eines Leitungselementes (1) für schwingbeanspruchte Rohrleitungen, insbesondere für Abgasleitungen in Kraftfahrzeugen, aus mindestens einem vorprofilierten Band (2; 3), insbesondere Metallband, das schraubengangförmig mit balgartigen Windungen (4; 22) gewickelt wird, wobei die durch eine Bandbreite gebildeten Wickellagen mit einfach eingehakter oder mehrlagiger agraffartiger Bindung (9; 19) durch Formschluß, Verschweißen oder dergleichen Fügeverfahren miteinander verbunden sind und das Band (2; 3) mit mindestens einem aus der Ebene versetzten Stich und Umlenkung in eine Art Kreisbahn mit sowohl im gestreckten als auch im gestauchten Zustand ein Vielfaches der Banddicke betragenden Steghöhen (h1, h2) der Bälge (4; 22) vorprofiliert wird,
**dadurch gekennzeichnet,**
**daß** die Bälge (4; 22) durch Verbinden der Enden von jeweils aus einem Endsteg (10) der einen Wickellage und aus einem Anfangssteg (11) der anderen Wickellage radial umgekanteten, abstehenden Stegen (5a, 5b) hergestellt werden.

2. Verfahren nach Anspruch 1,
**dadurch gekennzeichnet,**
**daß** die Stegenden im Wellenberg (15) durch ein umformtechnisches Fügen miteinander verbunden werden.

3. Verfahren nach Anspruch 1,
**dadurch gekennzeichnet,**
**daß** die Stegenden im Wellenberg (15) durch thermisches Fügen miteinander verbunden werden.

4. Verfahren nach einem der Ansprüche 1 bis 3,
**dadurch gekennzeichnet,**
**daß** in einen äußeren Balg (4) ein im Wellental (16) des äußeren Balges mit diametral verlaufenden, dann aufeinander zu in einen gemeinsamen Überbrückungs- und Verbindungssteg (21) umgefalzten Kurvenabschnitten seiner Stege (5b) übergehender, glockenartiger innerer Balg (22) gewickelt wird.

5. Verfahren nach Anspruch 4,
**dadurch gekennzeichnet,**
**daß** die oben freien Stegenden des glockenartigen inneren Balges (22) mit jeweils den benachbarten Stegenden des äußeren Balges (4) verbunden werden.

6. Leitungselement (1) für schwingbeanspruchte Rohrleitungen, insbesondere für Abgasleitungen in Kraftfahrzeugen, hergestellt aus mindestens einem vorprofilierten Band (2; 3), insbesondere Metallband, das schraubengangförmig mit balgartigen Windungen (4; 22) gewickelt wird, wobei die durch eine Bandbreite gebildeten Wickellagen mit einfach eingehakter oder mehrlagiger agraffartiger Bindung (9; 19) durch Formschluß, Verschweißen oder dergleichen Fügeverfahren miteinander verbunden sind und die ausgebildeten Bälge (4; 22) eine ein Vielfaches der Banddicke betragende. Steghöhe (h1, h2) aufweisen, hergestellt gemäß dem Verfahren nach einem der Ansprüche 1 bis 5,
**dadurch gekennzeichnet,**
**daß** jeder Balg (4) aus aus den Wickellagen umgekanteten, radial abstehenden Stegen (5a, 5b) besteht, deren freie Enden im Wellenberg (15) gasdicht miteinander verbunden sind.

7. Leitungselement nach Anspruch 6,
**dadurch gekennzeichnet,**
**daß** ein den Schlauchgrundkörper bildendes Band (3) mit glockenartigen Bälgen (22) ausgebildet ist, die jeweils in einem Balg (4) des anderen Bandes (2) angeordnet sind, wobei die freien Stegenden des äußeren Balges (4) in dessen Wellenberg (15) mit jeweils den freien Enden der innen benachbarten Stege (5b) des glockenartigen. Balges (22) verbunden sind, der mit einem aus den Stegen (5b) umgefalzten Verbindungssteg (21) das Wellental (16) des äußeren Balges (4) überdeckt.

## Claims

1. Method for manufacturing a pipe element (1) for pipes that are subject to vibrational stress, in particular for exhaust gas pipes in motor vehicles, made of a least one pre-profiled strip (2; 3), in particular a metallic strip, which is wound in convolutions with bellows-like windings (4, 22), wherein the coil windings formed by a strip width are interlinked in a single-hooked or multi-layer clasp-type bond (9, 19) by means of positive locking, welding or similar joining methods, and the strip (2, 3) is pre-profiled with at least one stitch that is offset from the plane by deflection into a kind of circuit with web heights (h1, h2) both in the straight as well as the clenched state of the bellows (4, 22) that are multiples of the strip thickness,
**characterized in that**
the bellows (4, 22) are produced by connecting the ends of the radially folded over webs (5a, 5b) projecting respectively out of an end web (10) of the one winding (10) and out of a starting web (11) of the other winding.

2. Method according to claim 1,
**characterized in that**
the web ends are joined together at the peak (15) by a joint made by a forming process.

3. Method according to claim 1,
**characterized in that**
the web ends are joined together at the peak (15) by a thermal joining process.

4. Method according to one of claims 1 to 3,
**characterized in that**
a bell-shaped inner bellows (22) in the valley (16) of the outer bellows, proceeding with curved sections of its webs (5b) running diametrically, then folded over on to each other into a common bridging and connecting web (21), is wound into an outer bellows (4).

5. Method according to claim 4,
**characterized in that**
the web ends of the bell-shaped inner bellows (22) that are free at the top are each joined to the adjacent web ends of the outer bellows (4).

6. Pipe element (1) for pipes that are subject to vibrational stress, in particular for exhaust gas pipes in motor vehicles, made of a least one preprofiled strip (2; 3), in particular a metallic strip, which is wound in convolutions with bellows-like windings (4, 22), wherein the coil windings formed by a strip width are interlinked in a single-hooked or multi-layer clasp-type bond (9, 19) by means of positive locking, welding or similar joining methods, and the constructed bellows (4, 22) have web heights (h1, h2) that are multiples of the strip thickness, manufactured according to the method of one of claims 1 to 5,
**characterized in that**
each bellows (4) consists of radially folded over webs (5a, 5b) projecting from the windings, the free ends of which are joined to form a gas-tight seal at the peak (15).

7. Pipe element according to claim 6,
**characterized in that**
a strip (3) forming the run pipe is constructed with bell-shaped bellows (22), which are each arranged in a bellows (4) of the other strip, wherein the free web ends of the outer bellows (4) at the peak (15) of the latter are joined respectively to the free ends of the inner adjacent webs (5b) of the bell-shaped bellows (22), which covers the valley (16) of the outer bellows (4) with a connecting web (21) folded over out of the webs (5b).

## Revendications

1. Procédé de fabrication d'un élément de conduit (1)
pour des tuyauteries contraintes par vibrations, notamment pour des conduits de gaz d'échappement dans des véhicules automobiles, en au moins une bande (2 ; 3) préprofilée, notamment une bande métallique, que l'on enroule en forme d'hélice avec des tours (4 ; 22) de type tuyau annelé, les couches d'enroulement formées par une largeur de bande étant assemblées entre elles par assemblage (9 ; 19) par simple accrochage ou agrafage multicouche, par complémentarité de forme, soudage ou procédés d'assemblage similaires, et la bande (2 ; 3) étant préprofilée par au moins un piquage déporté par rapport au plan et par renvoi en une sorte de trajectoire circulaire avec des hauteurs de nervures ha, h2) des tuyau annelés (4 ; 22) correspondant aussi bien à l'état étiré qu'à l'état refoulé à un multiple de l'épaisseur de bande, **caractérisé en ce que**,
on fabrique les tuyau annelés (4 ; 22) par assemblage des extrémités chaque fois de nervures (5a, 5b) repliées en direction radiale, débordant d'une nervure d'extrémité finale (10) de l'une des couches d'enroulement et d'une nervure d'extrémité initiale (11) de l'autre couche d'enroulement.

2. Procédé selon la revendication 1,
**caractérisé en ce que**,
on assemble les extrémités de nervures en un sommet (15) par assemblage par technique de formage.

3. Procédé selon la revendication 1,
**caractérisé en ce que**,
on assemble les extrémités de nervures en un sommet (15) par assemblage thermique.

4. Procédé selon l'une quelconque des revendications 1 à 3,
**caractérisé en ce que**,
on enroule dans un tuyau annelé extérieur (4) un tuyau annelé intérieur (22) en forme de cloche, s'écoulant diamétralement dans le creux de l'onde (16) du tuyau annelé extérieur, puis passant dans des sections curvilignes repliées l'une sur l'autre en une nervure de chevauchement et d'assemblage (21) commune de ses nervures (5b).

5. Procédé selon la revendication 4,
**caractérisé en ce que**,
on assemble les extrémités libres des nervures du tuyau annelé intérieur en forme de cloche (22) avec des extrémités respectivement voisines du tuyau annelé extérieur (4).

6. Elément de conduit (1) pour des tuyauteries contraintes par vibrations, notamment pour des conduits de gaz d'échappement dans des véhicules automobiles, fabriqué en au moins une bande (2 ; 3) préprofilée, notamment une bande métallique, que l'on enroule en forme d'hélice avec des tours (4 ; 22) de type tuyau annelé, les couches d'enroulement formées par une largeur de bande étant assemblées entre elles par assemblage (9 ; 19) par simple accrochage ou agrafage multicouche, par complémentarité de forme, soudage ou procédés d'assemblage similaires, et les tuyaux annelés (4 ; 22) formés présentant des hauteurs de nervure (h1, h2) correspondant à un multiple de l'épaisseur de la bande, fabriqué d'après le procédé selon l'une quelconque des revendications 1 à 5,
**caractérisé en ce que**,
chaque tuyau annelé (4) consiste dans des nervures (5a, 5b) saillant en direction radiale, retournées à partir des couches d'enroulement, dont on assemble entre elles de façon étanche au gaz les extrémités libres en un sommet (15).

7. Elément de conduit selon la revendication 6,
**caractérisé en ce que**,
il est formé une bande (3) formant le corps de base du flexible, avec des tuyaux annelés en forme de cloche (22) qui sont chaque fois disposés dans un tuyau annelé (4) de l'autre bande (2), les extrémités libres des nervures du tuyau annelé extérieur (4) étant reliées dans le sommet (15) de ce dernier avec chaque fois les extrémités libres des nervures intérieures (5b) voisines du tuyau annelé en forme de cloche (22) qui avec une nervure d'assemblage (21) repliée à partir des nervures (5b) recouvre le creux de l'onde (16) du tuyau annelé extérieur (4).
